# EUROPEAN PATENT APPLICATION

(11) **EP 4 247 048 A1**
(43) Date of publication of application: **20.09.2023**
(21) Application number: 21902388.4
(22) Date of filing: 23.11.2021
(51) Int. Cl.: H04W 28/04

(54) **TRIGGER FRAME SENDING METHOD AND APPARATUS**

(30) Priority: 11.12.2020 CN 202011460426
(71) Applicant: Huawei Technologies Co., Ltd., Shenzhen, Guangdong 518129 (CN)
(72) Inventor: LI, Yiqing, Shenzhen, Guangdong 518129 (CN); LI, Yunbo, Shenzhen, Guangdong 518129 (CN); GUO, Yuchen, Shenzhen, Guangdong 518129 (CN); YU, Jian, Shenzhen, Guangdong 518129 (CN); GAN, Ming, Shenzhen, Guangdong 518129 (CN)
(74) Representative: Grünecker Patent- und Rechtsanwälte PartG mbB
(86) International application number: PCT/CN2021/132490
(87) International publication number: WO 2022/121681

(57) **Abstract**

A trigger frame transmitting method and an apparatus are provided, which relate to the field of wireless communications technologies (for example, a WLAN), and are used for implementing error recovery related to a trigger frame in an NSTR MLD communication scenario. The method includes: A multi-link device MLD transmits a first trigger frame through a first link at a first moment, and transmits a second trigger frame through a second link at the first moment, where a transmission end moment of the first trigger frame is aligned with a transmission end moment of the second trigger frame. Then, when the MLD does not successfully receive, through the first link, a first TB PPDU triggered by the first trigger frame, and successfully receives, through the second link, a second TB PPDU triggered by the second trigger frame, the MLD transmits a third trigger frame through the first link at a second moment, and transmits a fourth trigger frame through the second link at a third moment, where the second moment is aligned with the third moment.

## Description

This application claims priority to Chinese Patent Application No. 202011460426.7, filed with the China Intellectual Property Administration on December 11, 2020 and entitled "TRIGGER FRAME TRANSMITTING METHOD AND APPARATUS", which is incorporated herein by reference in its entirety.

### TECHNICAL FIELD

This application relates to the field of communications technologies, and in particular, to a trigger frame transmitting method and an apparatus.

### BACKGROUND

To achieve a technical objective of an extremely high throughput, multi-link (multi-link, ML) communication is used as one of key technologies in the Institute of Electrical and Electronics Engineers (institute of electrical and electronics engineers, IEEE) 802.11be standard. A multi-link device (multi-link device, MLD) supporting ML communication has a capability of transmitting and receiving on multiple links. In this way, the MLD can use a larger bandwidth for data transmission, to significantly improve a throughput rate. One link may refer to a spatial path, of the MLD, for data transmission on one frequency band.

Depending on whether the MLD has a capability of simultaneous transmitting and receiving (simultaneous transmitting and receiving, STR) on different links, MLDs may be classified into STR MLDs and non-STR MLDs. The STR MLDs have the capability of STR, but the non-STR MLDs do not.

In a scenario where a non-STR MLD participates in communication, link error recovery is an important part. However, currently no error recovery mechanism related to a trigger frame is provided in the industry.

### SUMMARY

Embodiments of this application provide a trigger frame transmitting method and an apparatus, to implement error recovery related to a trigger frame in a non-STR MLD communication scenario.

According to a first aspect, a trigger frame transmitting method is provided. The method includes: A multi-link device MLD transmits a first trigger frame through a first link at a first moment, and transmits a second trigger frame through a second link at the first moment. A transmission end moment of the first trigger frame is aligned with a transmission end moment of the second trigger frame. When the MLD does not successfully receive, through the first link, a first trigger-based physical layer protocol data unit (trigger-based PHY protocol data unit, TB PPDU) that is triggered by the first trigger frame and successfully receives the second TB PPDU triggered by the second trigger frame through the second link, the MLD transmits a third trigger frame through the first link at a second moment, and transmits a fourth trigger frame through the second link at a third moment, where the second moment is aligned with the third moment.

Based on the foregoing technical solution, when the MLD does not successfully receive, through the first link, the first TB PPDU triggered by the first trigger frame, and successfully receives, through the second link, the second TB PPDU triggered by the second trigger frame, the MLD transmits the third trigger frame through the first link at the second moment, and transmits the fourth trigger frame through the second link at the third moment. It can be learned that, when an error related to the first trigger frame occurs on the first link, the MLD may further transmit a next trigger frame (that is, the third trigger frame) on the first link, to implement error recovery on the first link. In addition, because the second moment is aligned with the third moment, the third trigger frame and the fourth trigger frame are synchronously transmitted, to reduce a probability that the MLD needs to simultaneously transmit and receive data, and ensure normal MLD communication.

In a possible design, after the MLD does not successfully receive, through the first link, the first TB PPDU triggered by the first trigger frame, the method further includes: The MLD detects a channel status of the first link after a transmission end moment of a block acknowledgment (block ack, BA) for the second TB PPDU.

In a possible design, that the MLD transmits a third trigger frame through the first link at a second moment includes: When the first link is in an idle state in a first preset time interval after the transmission end moment of the BA for the second TB PPDU, the MLD transmits the third trigger frame through the first link at the second moment. This design can avoid a conflict between information transmitted by the MLD on the first link and information transmitted by another device on the first link.

In a possible design, a time interval between the third moment and the transmission end moment of the BA for the second TB PPDU is equal to the first preset time interval.

In a possible design, the first preset time interval is a point coordination function interframe space (point coordination function interframe space, PIFS). In this way, the time interval between the third moment and the transmission end moment of the BA for the second TB PPDU is changed from an SIFS defined in the related technology to the PIFS, to ensure that the third moment is aligned with the second moment, thereby ensuring that the MLD can synchronously transmit on the first link and the second link.

In a possible design, after the MLD does not successfully receive, through the first link, the first TB PPDU triggered by the first trigger frame, the method further includes: The MLD performs a backoff procedure on the first link. When a backoff counter of the first link backs off to 0 before a transmission start moment of the BA for the second TB PPDU. The MLD keeps the backoff counter of the first link at 0 until transmission of the BA for the second TB PPDU ends. The MLD detects the channel status of the first link from the transmission end moment of the BA for the second TB PPDU.

In a possible design, that the MLD transmits a third trigger frame through the first link at a second moment includes: When the first link is in an idle state in a second preset time interval after the transmission end moment of the BA for the second TB PPDU, the MLD transmits the third trigger frame through the first link at the second moment.

In a possible design, a time interval between the third moment and the transmission end moment of the BA for the second TB PPDU is equal to the second preset time interval.

In a possible design, the second preset time interval is a short interframe space (short interframe space, SIFS). Based on this design, it is equivalent to that a time period that needs to be waited after a switch from a busy state to an idle state in the backoff procedure is changed from an AIFS defined in the related technology to an SIFS, to ensure that the second moment can be aligned with the third moment, thereby ensuring that the MLD can synchronously transmit on the first link and the second link.

In a possible design, after the MLD does not successfully receive, through the first link, the first TB PPDU triggered by the first trigger frame, the method further includes: The MLD transmits a dummy (dummy) frame through the first link at a fourth moment. The transmission start moment of the BA for the second TB PPDU and the fourth moment are aligned, and a length of the dummy frame is the same as a length of the BA for the second TB PPDU. Based on this design, a TXOP of the MLD on the first link is maintained by transmitting the dummy frame, so that the MLD can transmit a next trigger frame on the first link.

In a possible design, before the MLD transmits the dummy frame through the first link at the fourth moment, the method further includes: The MLD determines that the first link is in an idle state within a PIFS before the fourth moment.

In a possible design, before the MLD transmits the dummy frame through the first link at the fourth moment, the method further includes: The MLD performs a backoff procedure on the first link. When the backoff counter of the first link backs off to 0 before the transmission start moment of the BA for the second TB PPDU, the MLD keeps the backoff counter of the first link at 0 until the fourth moment.

In a possible design, that the MLD does not successfully receive, through the first link, a first TB PPDU triggered by the first trigger frame includes: The MLD determines that transmission of the first trigger frame fails.

In a possible design, that the MLD does not successfully receive, through the first link, a first TB PPDU triggered by the first trigger frame includes: The MLD determines that an error occurs in the received first TB PPDU.

According to a second aspect, a trigger frame transmitting method is provided. The method includes: A multi-link device MLD transmits a first trigger frame through a first link at a first moment, and transmits a second trigger frame through a second link at a first moment. A transmission end moment of the first trigger frame is aligned with a transmission end moment of the second trigger frame. When transmission of the first trigger frame fails, and the MLD successfully receives, through the second link, a second TB PPDU triggered by the second trigger frame, the MLD transmits a third trigger frame through the first link at a second moment. The second moment is after a transmission end moment of the second TB PPDU and before a transmission start moment of a BA for the second TB PPDU.

Based on the foregoing technical solution, when an error occurs in a first TB PPDU triggered by the first trigger frame, and the second TB PPDU triggered by the second trigger frame is successfully received on the second link, the MLD transmits the third trigger frame through the first link at the second moment. It can be learned that, when an error related to the first trigger frame occurs on the first link, the MLD may further transmit a next trigger frame (that is, the third trigger frame) on the first link, to implement error recovery on the first link. In addition, the second moment is after the transmission end moment of the second TB PPDU and before the transmission start moment of the BA for the second TB PPDU, to avoid adverse impact caused by the BA for the second TB PPDU on the error recovery on the first link, so that normal error recovery on the first link can be performed. In addition, in a time period from the transmission end moment of the second TB PPDU to the transmission start moment of the BA for the second TB PPDU, the MLD does not need to receive data on the second link. The MLD transmits the third trigger frame in the time period, so that a probability that the MLD needs to simultaneously transmit and receive data is reduced, and normal communication of the MLD is ensured.

In a possible design, after the MLD determines that transmission of the first trigger frame fails, the method further includes: The MLD determines that the first link is in an idle state within a PIFS before the second moment.

In a possible design, after the MLD determines that transmission of the first trigger frame fails, the method further includes: The MLD performs a backoff procedure on the first link. When a backoff counter of the first link backs off to 0 before the second moment, the MLD keeps the backoff counter of the first link at 0 until the second moment.

In a possible design, the second moment is aligned with the transmission start moment of the BA for the second TB PPDU. Alternatively, the second moment is aligned with the transmission end moment of the second TB PPDU.

According to a third aspect, an MLD is provided. The MLD includes a processing module and a communication module connected to the processing module. The communication module is configured to transmit a first trigger frame through a first link at a first moment, and transmit a second trigger frame through a second link at the first moment, where a transmission end moment of the first trigger frame is aligned with a transmission end moment of the second trigger frame. The processing module is further configured to: when the MLD does not successfully receive, through the first link, a first trigger-based physical layer protocol data unit TB PPDU triggered by the first trigger frame, and successfully receives, through the second link, a second TB PPDU triggered by the second trigger frame, control the communication module to transmit a third trigger frame through the first link at a second moment, and transmit a fourth trigger frame through the second link at a third moment, where the second moment is aligned with the third moment.

In a possible design, the processing module is further configured to: after the MLD does not successfully receive, through the first link, the first TB PPDU triggered by the first trigger frame, detect a channel status of the first link after a transmission end moment of a block acknowledgment BA for the second TB PPDU.

In a possible design, the communication module is configured to: when the first link is in an idle state within a first preset time interval after the transmission end moment of the BA for the second TB PPDU, transmit the third trigger frame through the first link at the second moment.

In a possible design, a time interval between the third moment and the transmission end moment of the BA for the second TB PPDU is equal to the first preset time interval.

In a possible design, the first preset time interval is a PIFS.

In a possible design, the processing module is further configured to: after the MLD does not successfully receive, through the first link, the first TB PPDU triggered by the first trigger frame, perform a backoff procedure on the first link; when a backoff counter of the first link backs off to 0 before a transmission start moment of a BA for the second TB PPDU, keep the backoff counter of the first link at 0 until transmission of the BA for the second TB PPDU ends; and detect a channel status of the first link from a transmission end moment of the BA for the second TB PPDU.

In a possible design, the communication module is configured to: when the first link is in an idle state within a second preset time interval after the transmission end moment of the BA for the second TB PPDU, transmit the third trigger frame through the first link at the second moment.

In a possible design, a time interval between the third moment and the transmission end moment of the BA for the second TB PPDU is equal to the second preset time interval.

In a possible design, the second preset time interval is an SIFS.

In a possible design, the communication module is further configured to: after the MLD does not successfully receive, through the first link, the first TB PPDU triggered by the first trigger frame, transmit a dummy frame through the first link at a fourth moment, where the fourth moment and a transmission start moment of a BA for the second TB PPDU are aligned, and a length of the dummy frame is the same as a length of the BAfor the second TB PPDU.

In a possible design, the processing module is further configured to: before the communication module transmits the dummy frame through the first link at the fourth moment, determine that the first link is in an idle state within a PIFS before the fourth moment.

In a possible design, the processing module is further configured to: perform a backoff procedure on the first link; and when a backoff counter of the first link backs off to 0 before the transmission start moment of the BA for the second TB PPDU, keep the backoff counter of the first link at 0 until the fourth moment.

In a possible design, that the MLD does not successfully receive, through the first link, a first TB PPDU triggered by the first trigger frame includes: The MLD determines that transmission of the first trigger frame fails.

In a possible design, that the MLD does not successfully receive, through the first link, a first TB PPDU triggered by the first trigger frame includes: The MLD determines that an error occurs in the received first TB PPDU.

According to a fourth aspect, a communication apparatus is provided. The communication apparatus includes a processing module and a communication module connected to the processing module. The communication module is configured to transmit a first trigger frame through a first link at a first moment, and transmit a second trigger frame through a second link at the first moment, where a transmission end moment of the first trigger frame is aligned with a transmission end moment of the second trigger frame. The processing module is further configured to: when transmission of the first trigger frame fails, and the MLD successfully receives, through the second link, a second TB PPDU triggered by the second trigger frame, control the communication module to transmit a third trigger frame through the first link at a second moment, where the second moment is after a transmission end moment of the second TB PPDU and before a transmission start moment of a BA for the second TB PPDU.

In a possible design, the processing module is further configured to: after determining that transmission of the first trigger frame fails, determine that the first link is in an idle state within a PIFS before the second moment.

In a possible design, the processing module is further configured to: after determining that transmission of the first trigger frame fails, perform a backoff procedure on the first link; and when a backoff counter of the first link backs off to 0 before the second moment, keep the backoff counter of the first link at 0 until the second moment.

In a possible design, the second moment is aligned with the transmission start moment of the BAfor the second TB PPDU. Alternatively, the second moment is aligned with the transmission end moment of the second TB PPDU.

According to a fifth aspect, a communication apparatus is provided. The communication apparatus includes a processor and a transceiver, and the processor and the transceiver are configured to implement the method provided in any design of the first aspect or the second aspect. The processor is configured to perform a processing action in the corresponding method, and the transceiver is configured to perform a receiving/transmitting action in the corresponding method.

According to a sixth aspect, a computer-readable storage medium is provided. The computer-readable storage medium stores computer instructions. When the computer instructions are run on a computer, the computer is enabled to perform the method provided in any design of the first aspect or the second aspect.

According to a seventh aspect, a computer program product including computer instructions is provided. When the computer instructions are run on a computer, the computer is enabled to perform the method according to any design in the first aspect or the second aspect.

According to an eighth aspect, a chip is provided. The chip includes a processing circuit and a transceiver pin, where the processing circuit and the transceiver pin are configured to implement the method according to any design in the first aspect or the second aspect. The processing circuit is configured to perform a processing action in a corresponding method, and the transceiver pin is configured to perform a receiving/transmitting action in the corresponding method.

It should be noted that, for a technical effect brought by any design of the third aspect to the eighth aspect, refer to a technical effect brought by a corresponding design of the first aspect or the second aspect. Details are not described herein again.

### BRIEF DESCRIPTION OF DRAWINGS

FIG. 1 is a schematic diagram of a backoff procedure in a related technology;
FIG. 2 is a schematic diagram of a communication scenario of an AP multi-link device and a STA multi-link device according to an embodiment of this application;
FIG. 3(a) and FIG. 3(b) are schematic diagrams of structures of an AP multi-link device and a STA multi-link device that participate in communication;
FIG. 4 is a schematic diagram of applying a PIFS error recovery mechanism to a trigger frame error scenario in a related technology;
FIG. 5 is a schematic diagram of applying a backoff error recovery mechanism to a trigger frame error scenario in a related technology;
FIG. 6 is a flowchart of a trigger frame transmitting method according to an embodiment of this application;
FIG. 7 is a schematic diagram of another trigger frame transmitting scenario according to an embodiment of this application;
FIG. 8 is a schematic diagram of another trigger frame transmitting scenario according to an embodiment of this application;
FIG. 9 is a schematic diagram of another trigger frame transmitting scenario according to an embodiment of this application;
FIG. 10 is a schematic diagram of another trigger frame transmitting scenario according to an embodiment of this application;
FIG. 11 is a schematic diagram of another trigger frame transmitting scenario according to an embodiment of this application;
FIG. 12 is a schematic diagram of another trigger frame transmitting scenario according to an embodiment of this application;
FIG. 13 is a flowchart of another trigger frame transmitting method according to an embodiment of this application;
FIG. 14 is a schematic diagram of another trigger frame transmitting scenario according to an embodiment of this application;
FIG. 15 is a schematic diagram of another trigger frame transmitting scenario according to an embodiment of this application;
FIG. 16 is a schematic diagram of another trigger frame transmitting scenario according to an embodiment of this application;
FIG. 17 is a schematic diagram of another trigger frame transmitting scenario according to an embodiment of this application;
FIG. 18 is a schematic diagram of a structure of a communication apparatus according to an embodiment of this application; and
FIG. 19 is a schematic diagram of a structure of another communication apparatus according to an embodiment of this application.

### DESCRIPTION OF EMBODIMENTS

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. Words such as "first" and "second" do not limit a quantity and an execution sequence, and words such as "first" and "second" are not necessarily different.

In this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

The technical solutions provided in this application may be applied to various communication systems, for example, a system using the IEEE 802.11 standard. For example, the IEEE 802.11 standard includes but is not limited to the 802.11be standard or a next-generation 802.11 standard. Application scenarios of the technical solutions of this application include communication between an AP and a STA, communication between APs, communication between STAs, and the like.

STAs in this application may be various user terminals, user apparatuses, access apparatuses, subscriber stations, subscriber units, mobile stations, user agents, user devices, or other devices that have a wireless communication function. The user terminals may include various handheld devices, vehicle-mounted devices, wearable devices, computing devices that have the wireless communication function, or other processing devices connected to a wireless modem, and include various forms of user equipments (user equipments, UEs), mobile stations (mobile stations, MSs), terminals (terminals), terminal equipments (terminal equipments), portable communication devices, handheld devices, portable computing devices, entertainment devices, game devices or systems, and global positioning system devices, or any other suitable device configured to perform network communication via wireless media. Herein, for ease of description, the devices mentioned above are collectively referred to as stations or STAs.

The access point AP in this application is an apparatus that is deployed in a wireless communication network and that provides a wireless communication function for a STA associated with the access point AP. The access point AP may be used as a hub of the communication system, and may be a communication device such as a base station, a router, a gateway, a repeater, a communication server, a switch, or a bridge. The base station may include various forms of macro base stations, micro base stations, relay stations, and the like. Herein, for ease of description, the devices mentioned above are collectively referred to as access points APs.

The following describes terms in embodiments of this application, to help a person skilled in the art have a better understanding.

### 1. Transmission opportunity (transmission opportunity, TXOP)

A TXOP is a basic unit in wireless channel access. The TXOP includes an initial time point and maximum duration (TXOP limit). In the TXOP limit, a station that obtains the TXOP may not perform channel contention again, and continuously use a channel to transmit multiple data frames.

The TXOP may be obtained through contention or hybrid coordinator (hybrid coordinator, HC) allocation. The TXOP obtained through contention may be referred to as an enhanced distributed channel access (enhanced distributed channel access, EDCA) TXOP. The TXOP obtained through HC allocation may be referred to as a hybrid coordination function controlled channel access (hybrid coordination function controlled channel access, HCCA) TXOP.

It should be understood that this application does not include obtaining of the TXOP. For specific details of a manner of obtaining the TXOP, refer to the conventional technology.

### 2. Interframe space (interframe space, IFS)

To avoid collision, the 802.11 protocol stipulates that a device needs to wait for a short period before transmitting a next frame. This period is an interframe space. A length of an interframe space depends on a data frame type. A frame with a high priority waits for a short time, and therefore may first obtain transmitting permission; a frame with a low priority waits for a longer time.

Different priorities for wireless medium access are provided based on interframe spaces, and the different priorities are classified according to time lengths of the interframe spaces. A shorter interframe space indicates a higher priority. Interframe spaces are sorted in ascending order as follows:
(1) Short interframe space (short interframe space, SIFS);
(2) Point coordination function interframe space (point coordination function interframe space, PIFS);
(3) Distributed coordination function interframe space (distributed coordination function interframe space, DIFS);
(4) Arbitration interframe space (arbitration interframe space, AIF S); and
(5) Extended interframe space (extended interframe space, EIFS).

### 3. Error recovery (error recovery)

In a related technology, after a TXOP is successfully established, when transmission of a PPDU fails in the TXOP, error recovery of a link is triggered.

Error recovery includes PIFS error recovery and backoff (back off) error recovery, which are separately described below:
(1) PIFS error recovery: After idle duration of a channel reaches a PIFS, a device transmits a next PPDU through the channel.
(2) Backoff error recovery: Channel backoff is performed, and a next PPDU is transmitted after the backoff ends.

### 4. Carrier sense mechanism

The carrier sense mechanism may be classified into a physical carrier sense mechanism and a virtual carrier sense mechanism.
(1) The physical carrier sense mechanism is also referred to as clear channel assessment (clear channel assessment, CCA). In a wireless communication system, before a target device needs to transmit data on a channel, the target device first receives data on the channel. If the target device does not find that another device transmits data on the channel after a given time, the target device starts to transmit data. If the target device finds that another device transmits data, the target device waits for a random period of time and then reattempts the process.
   Clear channel assessment includes packet detection and energy detection. Packet detection is to detect whether a data packet is transmitted on the channel (whether a data packet is transmitted may be determined by detecting whether a packet header exists). If a data packet exists on the channel and energy exceeds a packet detection threshold, the channel is considered busy. Energy detection is to detect energy on a channel. If energy on a channel is greater than or equal to an energy detection threshold, the channel is considered busy. Only when both results of packet detection and energy detection indicate that the channel is idle, the channel is considered to be in an idle state. In other words, if no packet header is detected in a time period, and energy on the channel is less than the energy detection threshold during energy detection, the channel is considered to be in an idle state.
(2) The virtual carrier sense mechanism uses information discovered in 802.11 frames to predict a status of a wireless medium. Generally, virtual carrier sense is provided by a NAV. One device may maintain one or more NAVs. The NAV is a timer, and is set based on a value of duration in a MAC header of the frame. A value of the NAV decreases as time elapses. If the NAV is not 0, it indicates that the wireless medium is in a busy state. If the NAV is 0, it indicates that the wireless medium is in an idle state. The wireless medium may be a channel, a frequency band, or the like.

The NAV is set based on a duration value in a MAC header of a frame, and may be specifically implemented as follows: After a station receives a frame, if a receiver address of the frame is not the station and a value of a duration field in the frame is greater than a current value of a NAV of the station, the station may update the NAV based on the duration (duration) field in the received frame; or if a receiver address of the frame is the station (which indicates that the station is a receiving station) or a value of a duration field in the frame is less than or equal to a current value of a NAV of the station, the NAV cannot be updated. The value of the NAV starts from an end moment of the received wireless frame.

### 5. Backoff mechanism

An IEEE 802.11 standard allows a plurality of users to share a same transmission medium. A transmitter checks availability of the transmission medium before transmitting data. The IEEE 802.11 standard uses carrier sense multiple access with collision avoidance (carrier sense multiple access with collision avoidance, CSMA/CA) to implement channel contention. To avoid collision, the CSMA/CA adopts a backoff mechanism.

The backoff mechanism on a single channel is described below. Before a device transmits a message, the device may select a random number from 0 to a contention window (contention window, CW), and use the random number as an initial value of a backoff counter. After an idle time of the channel reaches an arbitration inter-frame space (arbitration inter-frame space, AIF S), a count value of the backoff counter decreases by 1 each time the channel is idle in a timeslot (timeslot). Before the count value of the backoff counter decreases to 0, if the channel is busy in one timeslot, the backoff counter stops counting. Then, if the channel changes from busy to idle in state and the idle time of the channel reaches the AIFS, the backoff counter resumes counting. When the count value of the backoff counter is 0, the backoff procedure ends, and the device may start data transmission.

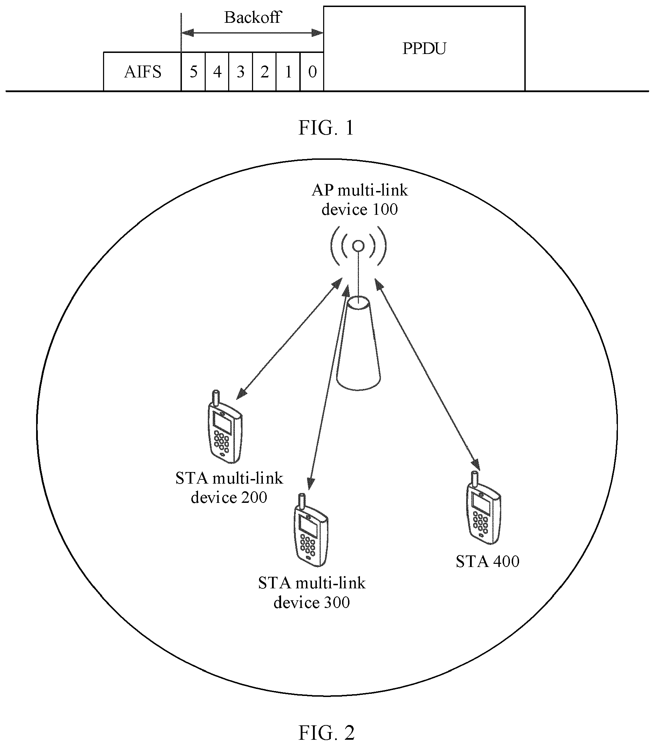

With reference to FIG. 1, it is assumed that an initial value of a backoff counter is 5, and after an idle time of a channel reaches an AIFS, the backoff counter starts to perform a backoff. Each time the channel is in an idle state in one timeslot, a count value of the backoff counter decreases by 1 until the count value of the backoff counter is 0. After the count value of the backoff counter is 0, the device successfully obtains a channel through contention, and the device may transmit a PPDU on the channel.

The foregoing describes the technical terms used in embodiments of this application, and details are not described below again.

According to the current IEEE 802.11 next-generation wireless fidelity (wireless fidelity, WiFi) protocol, an extremely high throughput (extremely high throughput, EHT) device supports a plurality of streams, a plurality of frequency bands (such as 2.4 GHz, 5 GHz, and 6 GHz frequency bands), cooperation of a plurality of channels in a same frequency band, and other manners, to improve a peak throughput and reduce a service transmission delay. The plurality of frequency bands or the plurality of channels may be collectively referred to as a multi-link.

The multi-link device includes one or more affiliated stations, and the affiliated stations may be logical stations or physical stations. In this embodiment of this application, "the multi-link device includes an affiliated station" may be briefly described as "the multi-link device includes a station".

The affiliated station may be an access point (access point, AP) or a non-access point station (non-access point station, non-AP STA). For ease of description, in embodiments of this application, a multi-link device whose station is an AP may be referred to as a multi-link AP, an AP MLD, or an AP multi-link device; and a multi-link device whose station is a STA may be referred to as a multi-link STA, a STA multi-link device, a STA MLD, or a non-AP MLD.

The multi-link device may implement wireless communication in compliance with the 802.11 protocol. For example, the 802.11 protocol may be an 802.11 ax protocol, an 802.11be protocol, or a next-generation 802.11 protocol. This is not limited in this embodiment of this application.

The multi-link device may communicate with another device. In this embodiment of this application, the another device may be a multi-link device, or may not be a multi-link device.

For example, FIG. 2 is a schematic diagram of a communication scenario between an AP multi-link device and a STA multi-link device. As shown in FIG. 2, one AP multi-link device may be associated with a plurality of STA multi-link devices and a single-link STA. For example, an AP multi-link device 100 is associated with a STA multi-link device 200, a STA multi-link device 300, and a STA 400. It should be understood that multiple APs in an AP multi-link device respectively operate on multiple links, multiple STAs in a STA multi-link device respectively operate on multiple links, and one STA in the STA multi-link device associates with one AP in an AP multi-link device on an operating link of the STA. A single-link STA associates with an AP in an AP multi-link device on an operating link of the STA.

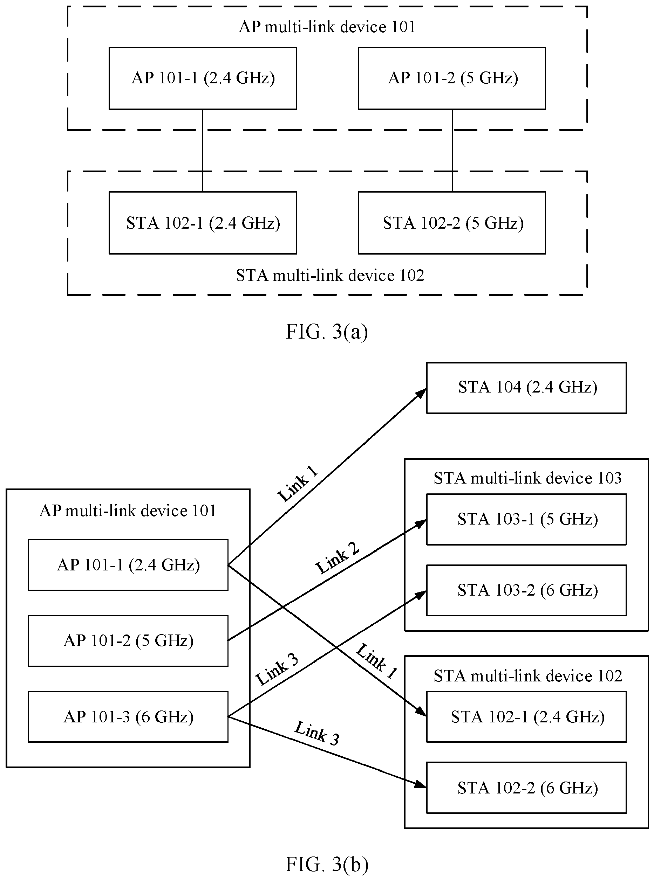

A frequency band on which the multi-link device operates may include but is not limited to sub 1 GHz, 2.4 GHz, 5 GHz, 6 GHz, and a high frequency 60 GHz. FIG. 3(a) and FIG. 3(b) show two schematic diagrams of communication between a multi-link device and another device through a plurality of links in a wireless local area network.

FIG. 3(a) shows a scenario in which an AP multi-link device 101 communicates with a STA multi-link device 102. The AP multi-link device 101 includes an affiliated AP 101-1 and an affiliated AP 101-2, the STA multi-link device 102 includes an affiliated STA 102-1 and an affiliated STA 102-2, and the AP multi-link device 101 and the STA multi-link device 102 communicate in parallel through a link 1 and a link 2.

FIG. 3(b) shows a scenario in which an AP multi-link device 101 communicates with a STA multi-link device 102, a STA multi-link device 103, and a STA 104. The AP multi-link device 101 includes affiliated AP 101-1 to AP 101-3. The STA multi-link device 102 includes two affiliated STAs: a STA 102-1 and a STA 102-2. The STA multi-link device 103 includes two affiliated STAs: a STA 103-1, a STA 103-2, and a STA 103-3. The STA 104 is a single-link device. The AP multi-link device may separately communicate with the STA multi-link device 102 through a link 1 and a link 3, communicate with the multi-link 103 through a link 2 and the link 3, and communicate with the STA 104 through the link 1. For example, the STA 104 operates on a 2.4 GHz frequency band. The STA multi-link device 103 includes the STA 103-1 and the STA 103-2, where the STA 103-1 operates on a 5 GHz frequency band, and the STA 103-2 operates on a 6 GHz frequency band. The STA multi-link device 102 includes the STA 102-1 and the STA 102-2, where the STA 102-1 operates on a 2.4 GHz frequency band, and the STA 102-2 operates on a 6 GHz frequency band. The AP 101-1 operating on the 2.4 GHz frequency band in the AP multi-link device may perform uplink or downlink data transmission with the STA 104 and the STA 102-2 in the STA multi-link device 102 through a link 1. The AP 101-2 operating on the 5 GHz frequency band in the AP multi-link device may perform uplink or downlink data transmission with the STA 103-1 operating on the 5 GHz frequency band in the STA multi-link device 103 on the link 2. The AP 101-3 operating on the 6 GHz frequency band in the AP multi-link device 101 may perform uplink or downlink data transmission with the STA 102-2 operating on the 6 GHz frequency band in the STA multi-link device 102 through a link 3, and may also perform uplink or downlink data transmission with the STA 103-2 in the STA multi-link device through the link 3.

It should be noted that FIG. 3(a) shows that the AP multi-link device supports only two frequency bands, and FIG. 3(b) uses only an example in which the AP multi-link device supports three frequency bands (2.4 GHz, 5 GHz, and 6 GHz), each frequency band corresponds to one link, and the AP multi-link device 101 may operate on one or more of the link 1, the link 2, and the link 3 for illustration. On an AP side or a STA side, the link herein may also be understood as a station operating on the link. In an actual application, the AP multi-link device and the STA multi-link device may further support more or fewer frequency bands. In other words, the AP multi-link device and the STA multi-link device may work on more links or fewer links. This is not limited in this embodiment of this application.

For example, the multi-link device is an apparatus having a wireless communication function. The apparatus may be a device of an entire system, or may be a chip, a processing system, or the like installed in the device of the entire system. The device on which the chip or the processing system is installed may be controlled by the chip or the processing system, to implement the method and functions in embodiments of this application.

The multi-link device may support simultaneous data transmitting and receiving (simultaneously transmit and receive, STR), or the multi-link device may not support simultaneous data transmitting and receiving. That the multi-link device supports simultaneous data transmitting and receiving means that in a process of transmitting data on one link, the multi-link device can receive data on another link. That the multi-link device does not support simultaneous data transmitting and receiving means that in a process of transmitting data on one link, the multi-link device cannot receive data on another link.

For the multi-link device that cannot simultaneously transmit and receive (not simultaneously transmit and receive, NSTR) data, due to a limited capability, when transmitting a signal on one link, the multi-link device may not be able to receive a signal on another link. In this case, if a data packet needs to be received on another link, an NSTR multi-link device may fail to receive the data packet, resulting in data packet loss. To avoid packet loss, the 802.11 protocol provides a synchronous multi-link communication manner. The synchronous multi-link communication manner requires that transmission end moments of PPDUs transmitted to an NSTR multi-link device on different links be aligned, to reduce a probability that the NSTR multi-link device needs to simultaneously transmit and receive.

Currently, the existing error recovery mechanism is not applicable to a communication scenario in which an NSTR MLD uses a trigger frame. Specifically, when an error related to a trigger frame occurs on a link (for example, transmission of a trigger frame fails or an error occurs in a TB PPDU triggered by the trigger frame), error recovery using the existing error recovery mechanism may fail, or after successful error recovery, the MLD may need to simultaneously transmit and receive.

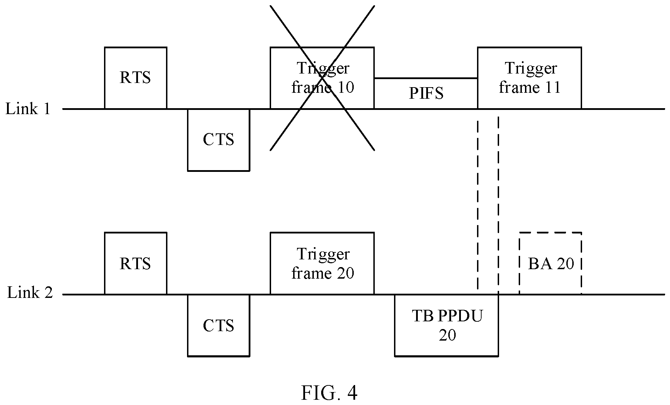

For example, as shown in FIG. 4, a transmit end MLD that does not support STR obtains TXOPs on a link 1 and a link 2 by using an RTS-CTS mechanism. Then, the transmit end MLD transmits a trigger frame 10 on the link 1, and transmits a trigger frame 20 on the link 2. In a transmission process, transmission of the trigger frame 10 fails, and the trigger frame 20 is successfully transmitted. However, on the link 1, after determining that transmission of the trigger frame 10 fails, the transmit end MLD may perform PIFS error recovery. However, after the PIFS error recovery, a trigger frame 11 transmitted by the transmit end MLD on the link 1 conflicts with a TB PPDU 20 that is being received. In this way, the transmit end MLD may not be able to normally receive the TB PPDU 20 on the link 2. Correspondingly, the transmit end MLD cannot reply, on the link 2, a BA 20 corresponding to the TB PPDU 20. In FIG. 4, the BA 20 is represented by a dashed box, indicating that the BA 20 is not transmitted.

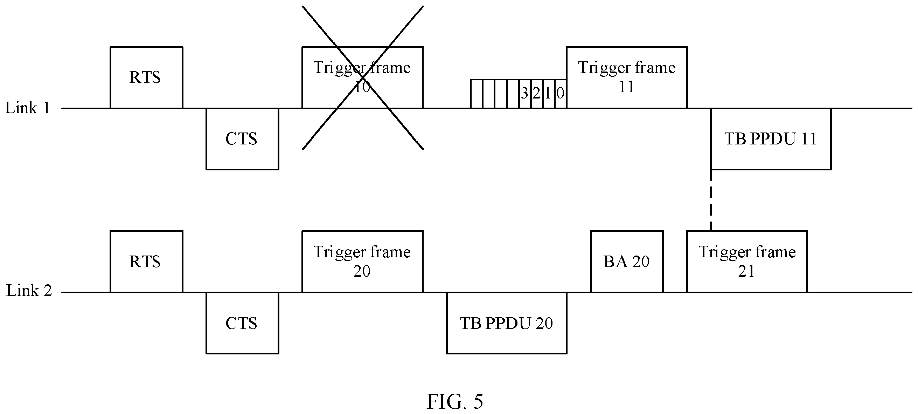

For another example, as shown in FIG. 5, a transmit end MLD that does not support STR obtains TXOPs on a link 1 and a link 2 by using an RTS-CTS mechanism. Then, the transmit end MLD transmits a trigger frame 10 on the link 1, and transmits a trigger frame 20 on the link 2. In a transmission process, transmission of the trigger frame 10 fails, and the trigger frame 20 is successfully transmitted. After determining that transmission of the trigger frame 10 fails, the transmit end MLD may perform backoff recovery. After backoff succeeds, the transmit MLD transmits a trigger frame 11 on the link 1. However, transmission time of a TB PPDU 11 triggered by the trigger frame 11 on the link 1 conflicts with transmission time of a trigger frame 21 transmitted by the transmit end MLD on the link 2. As a result, the transmit end MLD needs to simultaneously transmit and receive, and normal communication of the transmit end MLD that does not support an STR capability is affected.

Therefore, for the NSTR MLD, it is necessary to design an appropriate solution to implement error recovery related to a trigger frame.

To resolve this technical problem, this application provides a trigger frame transmitting method and an apparatus. Embodiments of this application are described in detail below with reference to accompanying drawings of the specification.

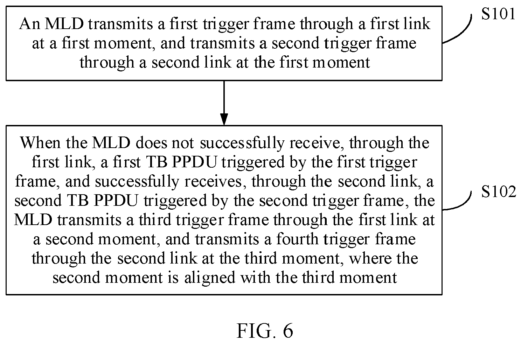

FIG. 6 shows a trigger frame transmitting method according to an embodiment of this application. The method includes the following steps.

S101: An MLD transmits a first trigger frame through a first link at a first moment, and transmits a second trigger frame through a second link at the first moment.

The MLD does not support STR on the first link and the second link. In other words, the MLD does not have an STR capability on the first link and the second link.

It should be understood that the first link and the second link are any two of a plurality of links configured in the MLD, and this is not limited herein.

In this embodiment of this application, the MLD may communicate with another MLD through the first link and the second link. Alternatively, the MLD communicates with a first device through the first link, and communicates with a second device through the second link. The first device and the second device are two independent devices.

In embodiments of this application, the MLD may be an AP MLD or a STA MLD.

In embodiments of this application, a transmission end moment of the first trigger frame is aligned with a transmission end moment of the second trigger frame. In this way, it is ensured that the MLD uses a synchronous multi-link communication manner, and a probability that the MLD performs simultaneous transmitting and receiving is reduced.

S102: When the MLD does not successfully receive, through the first link, a first TB PPDU triggered by the first trigger frame, and successfully receives, through the second link, a second TB PPDU triggered by the second trigger frame, the MLD transmits a third trigger frame through the first link at a second moment, and transmits a fourth trigger frame through the second link at a third moment.

It should be understood that "successfully receive" may be replaced with "correctly receive" or another similar description. This is not limited herein.

In this embodiment of this application, the second moment is aligned with the third moment. In addition, a transmission end moment of the third trigger frame is aligned with a transmission end moment of the fourth trigger frame.

It should be understood that, that two moments are aligned may mean that the two moments are the same, or an offset between the two moments is within an offset range allowed in the 802.11 protocol. For example, the offset range allowed in the current 802.11 protocol may be [-8 µs, 8 µs] or [-4 µs, 4 µs]. This is uniformly described herein, and details are not described below again.

Optionally, because both transmission start moments and transmission end moments of the third trigger frame and the fourth trigger frame are aligned, it is expected that the third trigger frame and the fourth trigger frame have a same length.

It should be understood that the third trigger frame is a trigger frame transmitted after the MLD transmits the first trigger frame through the first link.

In a possible design, a parameter included in the third trigger frame may be the same as or similar to a parameter included in the first trigger frame. Therefore, a TB PPDU triggered by the third trigger frame is the same as the TB PPDU triggered by the first trigger frame.

Optionally, based on this design, the third trigger frame may include the first trigger frame and padding (padding).

In another possible design, a parameter included in the third trigger frame may be different from a parameter included in the first trigger frame. Therefore, a TB PPDU triggered by the third trigger frame is different from the TB PPDU triggered by the first trigger frame.

Optionally, based on this design, the third trigger frame and the first trigger frame may be used to trigger a same device to transmit TB PPDUs, or may be used to trigger different devices to transmit TB PPDUs.

In this embodiment of this application, that the MLD does not successfully receive the first TB PPDU through the first link includes the following two cases:
Case 1: The MLD determines that transmission of the first trigger frame fails.

Optionally, that transmission of the first trigger frame fails may be replaced with that an error occurs in the first trigger frame. This is not limited herein.

In a possible design, that the MLD determines that transmission of the first trigger frame fails may be specifically implemented as follows: The MLD does not receive the first TB PPDU within a preset time interval after a transmission end moment of the first trigger frame.

For example, after a physical layer of the MLD transmits the first trigger frame on the first link, the physical layer of the MLD transmits, to a MAC layer of the MLD, a signal (for example, PHY-TXEND.confirm primitive) used to acknowledge that transmission of the first trigger frame ends. Then, if the MAC layer of the MLD does not receive, within the preset time interval, a signal (for example, a PHY-RXSTART.indication primitive) that is transmitted by the physical layer of the MLD and that is used to acknowledge reception of the first TB PPDU, the MLD may determine that transmission of the first trigger frame on the first link fails.

For example, the preset time interval may be aSIFSTime + aSlotTime + aRxPHYStart-Delay. aSIFSTime represents duration of an SIFS, aSlotTime represents duration of a slot, and aRxPHYStart-delay represents a delay from a PPDU on a receive end antenna to transmitting of the PHY-RXSTART.indication primitive.

Case 2: The MLD determines that an error occurs in the received first TB PPDU.

In a possible design, if the MLD receives the first TB PPDU, but a frame check sequence (frame check sequence, FCS) calculated based on the first TB PPDU is inconsistent with an FCS carried in the first TB PPDU, the MLD may determine that an error occurs in the received first TB PPDU.

In another possible design, a MAC layer of the MLD receives a PHY-RXEND.indication primitive that is related to the first TB PPDU and that is transmitted by a physical layer. If a parameter receiving error (RXERROR) carried in the PHY-RXEND.indication primitive is another value (for example, format violation (Format Violation), carrier lost (CarrierLost), unsupported rate (UnsupportedRate), and filtered (Filtered)) other than no error (NoError), the MLD may determine that an error occurs in the received first TB PPDU.

The following describes in detail an error recovery solution that may be used by the MLD.

Error recovery solution 1: After the MLD does not successfully receive the first TB PPDU through the first link, the MLD detects a channel status of the first link after a transmission end moment of a BA for the second TB PPDU. When the first link is in an idle state within a first preset time interval after the transmission end moment of the BA for the second TB PPDU, the MLD may transmit the third trigger frame through the first link at the second moment.

Optionally, a start moment for detecting the channel status of the first link may be the transmission end moment of the BA for the second TB PPDU or a moment after the transmission end moment of the BA for the second TB PPDU.

Optionally, for the error recovery solution 1, if the first link is not continuously in an idle state within the first preset time interval after the transmission end moment of the BA for the second TB PPDU, it indicates that error recovery fails, and the MLD may not transmit the third trigger frame through the first link at the second moment.

It should be understood that the channel status of the first link may be detected in a CCA detection manner or another detection manner. This is not limited herein.

For an NSTR MLD, in a process in which the MLD performs channel detection on the first link, if the MLD transmits information (for example, the BA for the second TB PPDU) on the second link, the first link is interfered by the information transmitted by the second link. Consequently, a channel detection result of the first link is in a busy state, and an error recovery failure on the first link is caused. Therefore, different from the PIFS error recovery in the related technology, in the error recovery solution 1, the start moment for detecting the channel status of the first link is the transmission end moment of the BA for the second TB PPDU or a moment after the transmission end moment of the BA for the second TB PPDU. In this way, in a channel detection process of the first link, the BA for the second TB PPDU transmitted on the second link does not affect the detection result of the channel status of the first link, and normal execution of the error recovery is ensured.

The existing PIFS error recovery requires that duration for which the first link remains in the idle state is a PIFS. However, it is defined in the current 802.11 protocol that a time interval between a transmission end moment of a BA and a transmission start moment of a next trigger frame is an SIFS. However, if a time interval between a transmission start moment of the fourth trigger frame and the transmission end moment of the BA for the second TB PPDU is an SIFS, and the SIFS is inconsistent with the PIFS, the fourth trigger frame and the third trigger frame may not be synchronously transmitted. In this case, in a possible design, in this embodiment of this application, a time interval between the transmission start moment (that is, the third moment) of the fourth trigger frame and the transmission end moment of the BA for the second TB PPDU is set to be the first preset time interval.

Optionally, the first preset time interval may be a PIFS. In this way, the error recovery solution 1 may comply with the specification of the PIFS error recovery in the conventional technology.

Alternatively, the first preset time interval may be another type of interframe space. For example, the first preset time interval may be an SIFS.

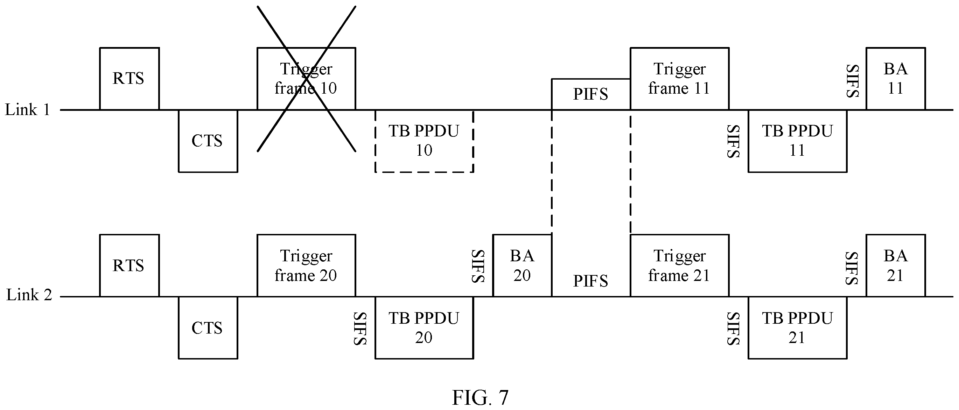

For example, FIG. 7 is used as an example to describe the foregoing error recovery solution 1. A transmit end MLD transmits a trigger frame 10 on a link 1, and transmits a trigger frame 20 on a link 2. The trigger frame 10 is aligned with the trigger frame 20. Transmission of the trigger frame 10 fails, and the trigger frame 20 is successfully transmitted. Then, the transmit end MLD receives a TB PPDU 20 on the link 2, and replies with a BA 20 for the TB PPDU 20 on the link 2. The transmit end MLD starts channel detection at a transmission end moment of the BA 20. When the first link is in an idle state in a PIFS from the transmission end moment of the BA 20, the transmit end MLD transmits a trigger frame 11 on the link 1. In addition, at a same moment at which the trigger frame 11 is transmitted, the transmit end MLD transmits a trigger frame 21 on the link 2. The trigger frame 11 is aligned with the trigger frame 21. In this way, it is ensured that a subsequent TB PPDU 11 is aligned with a TB PPDU 21, and a BA 11 is aligned with a BA 21.

The TB PPDU 10 in FIG. 7 is represented by a dashed box to indicate that the TB PPDU 10 is not received. The dashed box in the following accompanying drawings also indicates that content in the box is not received. This is uniformly described herein, and details are not described in the following embodiments.

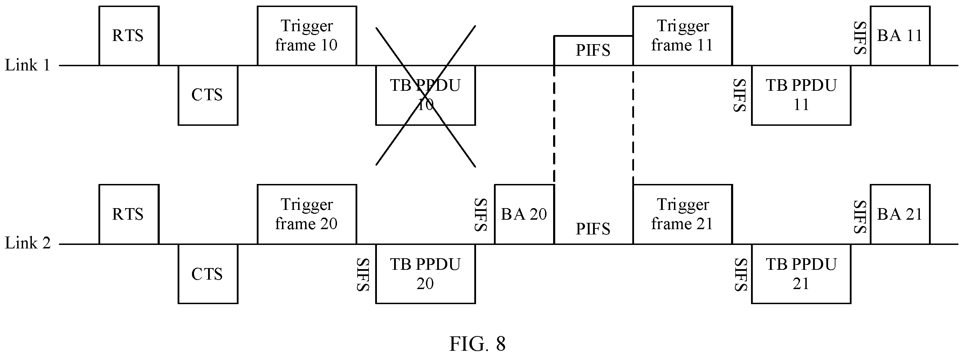

For example, FIG. 8 is used as an example to describe the foregoing error recovery solution 1. A transmit end MLD transmits a trigger frame 10 on a link 1, and transmits a trigger frame 20 on a link 2. The trigger frame 10 is aligned with the trigger frame 20. The transmit end MLD successfully receives a TB PPDU 20 on the link 2, and replies with a BA 20 for the TB PPDU 20 after an interval of an SIFS. Because an error occurs in a TB PPDU 10 received by the transmit end MLD on the link 1, the transmit end MLD starts channel detection at a transmission end moment of the BA 20. When the first link is in an idle state in a PIFS from the transmission end moment of the BA 20, the transmit end MLD transmits a trigger frame 11 on the link 1. In addition, at a same moment at which the trigger frame 11 is transmitted, the transmit end MLD transmits a trigger frame 21 on the link 2. The trigger frame 11 is aligned with the trigger frame 21. In this way, it is ensured that a subsequent TB PPDU 11 is aligned with a TB PPDU 21, and a BA 11 is aligned with a BA 21.

Error recovery solution 2: After the MLD does not successfully receive the first TB PPDU through the first link, the MLD performs a backoff procedure on the first link. When a backoff counter of the first link backs off to 0 before a transmission start moment of a BAfor the second TB PPDU, the MLD keeps the backoff counter of the first link at 0 until transmission of the BA for the second TB PPDU ends. Then, the MLD detects a channel status of the first link from a transmission end moment of the BA for the second TB PPDU. When the first link is in an idle state within a second preset time interval after the transmission end moment of the BA for the second TB PPDU, the MLD transmits the third trigger frame through the first link at the second moment.

It should be understood that, a purpose for that when a backoff counter of the first link backs off to 0 before a transmission start moment of a BA for the second TB PPDU, the MLD keeps the backoff counter of the first link at 0 until transmission of the BAfor the second TB PPDU ends is to ensure that the third trigger frame on the first link and the fourth trigger frame on the second link can be synchronously transmitted.

Optionally, for the error recovery solution 2, if the backoff counter of the first link does not back off to 0 before the transmission start moment of the BA for the second TB PPDU, it indicates that the error recovery fails, and therefore the MLD may not transmit the third trigger frame through the first link at the second moment.

In one aspect, in a process of transmitting the BAfor the second TB PPDU, a channel detection result of the first link is a busy state due to impact of the BAfor the second TB PPDU. Therefore, the MLD suspends (suspend) the backoff procedure. After transmission of the BA for the second TB PPDU ends, the channel status of the first link changes from the busy state to the idle state. However, according to the existing backoff mechanism, the first link needs to remain in the idle state for a period of time (for example, a DIFS, an EIFS, or an AIFS) to continue the backoff procedure, and obtain a channel through contention. In another aspect, currently, it is defined in the 802.11 protocol that a time interval between a transmission end moment of a BA and a transmission start moment of a next trigger frame is an SIFS. In this way, if the second preset time interval is still set to the DIFS, the EIFS, or the AIFS, and a time interval between a transmission end moment of the second TB PPDU and a transmission start moment of the fourth trigger frame is set to the SIFS, the third trigger frame and the fourth trigger frame cannot be synchronously transmitted.

In this case, in a possible design, in this embodiment of this application, a time interval between the transmission start moment (that is, the third moment) of the fourth trigger frame and the transmission end moment of the BA for the second TB PPDU is set to be the second preset time interval.

Optionally, the second preset time interval may be an SIFS. In this way, the time interval between a transmission end moment of a BA and a transmission start moment of a next trigger frame defined in the existing protocol does not need to be modified.

Alternatively, the second preset time interval may be another type of interframe space. This is not limited herein. For example, the second preset time interval may be a PIFS, a DIFS, an AIFS, or an EIFS.

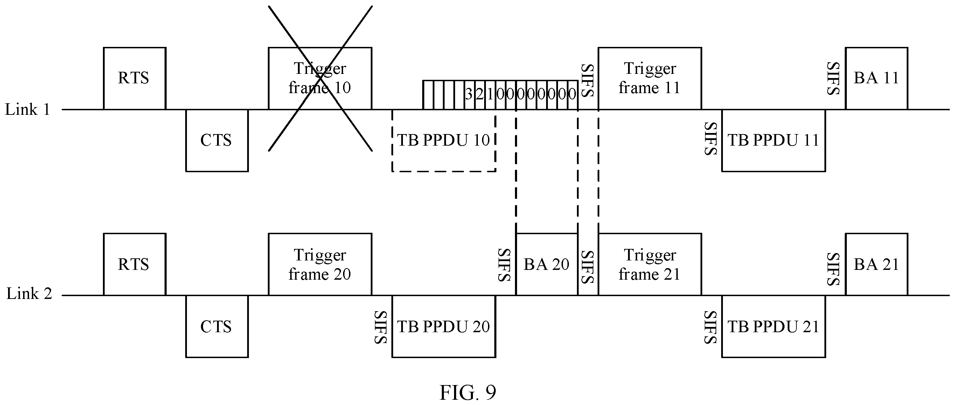

For example, FIG. 9 is used as an example to describe the foregoing error recovery solution 2. A transmit end MLD transmits a trigger frame 10 on a link 1, and transmits a trigger frame 20 on a link 2. The trigger frame 10 is aligned with the trigger frame 20. Transmission of the trigger frame 10 fails, and the trigger frame 20 is successfully transmitted. Then, the transmit end MLD receives a TB PPDU 20 on the link 2, and replies with a BA 20 for the TB PPDU 20 on the link 2. After transmission of the trigger frame 10 fails, the transmit end MLD performs a backoff procedure on the link 1. If a backoff counter on the link 1 backs off to 0 before a transmission start moment of the BA 20, the transmit end MLD keeps the backoff counter on the link 1 at 0 until transmission of the BA 20 ends. After transmission of the BA 20 ends, the transmit end MLD detects a channel status of the link 1. When duration that the link 1 is in an idle state reaches an SIFS, the transmit end MLD transmits a trigger frame 11 on the link 1. In addition, the transmit end MLD transmits a trigger frame 21 on the link 2 after an SIFS starting from a transmission end moment of the BA 20. It can be learned that the trigger frame 11 may be aligned with the trigger frame 21. In this way, it is ensured that a subsequent TB PPDU 11 is aligned with a TB PPDU 21, and a BA 11 is aligned with a BA 21.

Error recovery solution 3: After the MLD does not successfully receive the first TB PPDU through the first link, the MLD transmits a dummy frame through the first link at a fourth moment, where the fourth moment is aligned with a transmission start moment of a BA for the second TB PPDU, and a length of the dummy frame is the same as a length of the BA for the second TB PPDU. Then, the MLD transmits the third trigger frame through the first link at the second moment. A time interval between the second moment and a transmission end moment of the dummy frame is an SIFS.

It should be understood that, an objective of transmitting the dummy frame by the MLD is to maintain a TXOP of the MLD on the first link, so that another device does not preempt the TXOP of the first link.

The dummy frame may be any type of frame, for example, a control frame or a data frame. This is not limited herein.

Because a transmission start moment (that is, the fourth moment) of the dummy frame is aligned with the transmission start moment of the BA for the second TB PPDU, and the length of the dummy frame is the same as the length of the BA for the second TB PPDU, it is ensured that the transmission end moment of the dummy frame is aligned with the transmission end moment of the BA for the second TB PPDU.

It should be understood that, that a transmission end moment of the dummy frame is aligned with the transmission end moment of the BA for the second TB PPDU may mean that the transmission end moment of the dummy frame and the transmission end moment of the BA for the second TB PPDU are the same, or that an offset between the transmission end moment of the dummy frame and the transmission end moment of the BA for the second TB PPDU is within an allowed offset range in the 802.11 protocol. For example, the offset range allowed in the current 802.11 protocol may be [-8 µs, 8 µs] or [-4 µs, 4 µs].

It should be understood that, for the error recovery solution 3, a time interval between a transmission start moment of the second TB PPDU and the transmission end moment of the BA for the second TB PPDU is not limited in this embodiment of this application. It should be understood that the time interval may be different values in different scenarios. For example, when transmission of the first trigger frame fails, a time interval between the transmission start moment of the second TB PPDU and the transmission end moment of the BA for the second TB PPDU may be an SIFS. Alternatively, when an error occurs in the first TB PPDU, a time interval between the transmission start moment of the second TB PPDU and the transmission end moment of the BA for the second TB PPDU may be a PIFS.

In a possible implementation, before transmitting the dummy frame, the MLD may use a backoff error recovery, to determine whether the dummy frame can be transmitted. For example, after the MLD does not successfully receive the first TB PPDU through the first link, the MLD performs a backoff procedure on the first link. When a backoff counter of the first link backs off to 0 before a transmission start moment of a BA for the second TB PPDU, the MLD keeps the backoff counter of the first link at 0 until the fourth moment Then, the MLD transmits the dummy frame through the first link at the fourth moment.

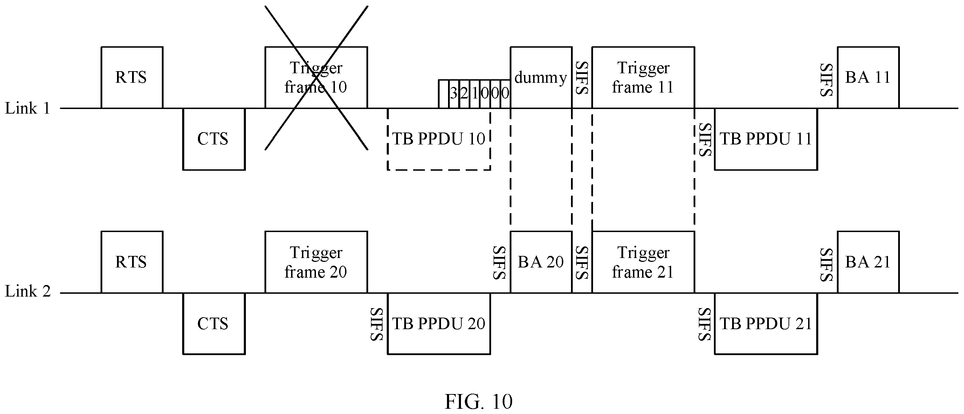

For example, FIG. 10 is used as an example to describe the foregoing error recovery solution 3. A transmit end MLD transmits a trigger frame 10 on a link 1, and transmits a trigger frame 20 on a link 2. The trigger frame 10 is aligned with the trigger frame 20. Transmission of the trigger frame 10 fails, and the trigger frame 20 is successfully transmitted. Then, the transmit end MLD receives a TB PPDU 20 on the link 2, and replies with a BA 20 for the TB PPDU 20 on the link 2. When transmission of the trigger frame 10 fails, the transmit end MLD performs a backoff procedure on the link 1. In addition, if a backoff counter on the link 1 backs off to 0 before a fourth moment, the transmit end MLD keeps a count value of the backoff counter on the link 1 at 0 until the fourth moment arrives. Then, the transmit end MLD transmits a trigger frame 11 through the link 1 after an SIFS starting from a transmission end moment of the dummy frame, and transmits a trigger frame 21 through the link 1 after an SIFS starting from a transmission end moment of the BA 20. In this way, it is ensured that the trigger frame 11 is aligned with the trigger frame 21, a subsequent TB PPDU 11 is aligned with a TB PPDU 21, and a BA 11 is aligned with a BA 21.

In another possible implementation, before transmitting the dummy frame, the MLD may use a PIFS error recovery, to determine whether the dummy frame can be transmitted. For example, after the MLD does not successfully receive the first TB PPDU through the first link, the MLD may perform channel detection on the first link. When the MLD determines that the first link is in an idle state within a PIFS before a transmission start moment of a BA for a second TB PPDU, the MLD transmits the dummy frame through the first link at the fourth moment.

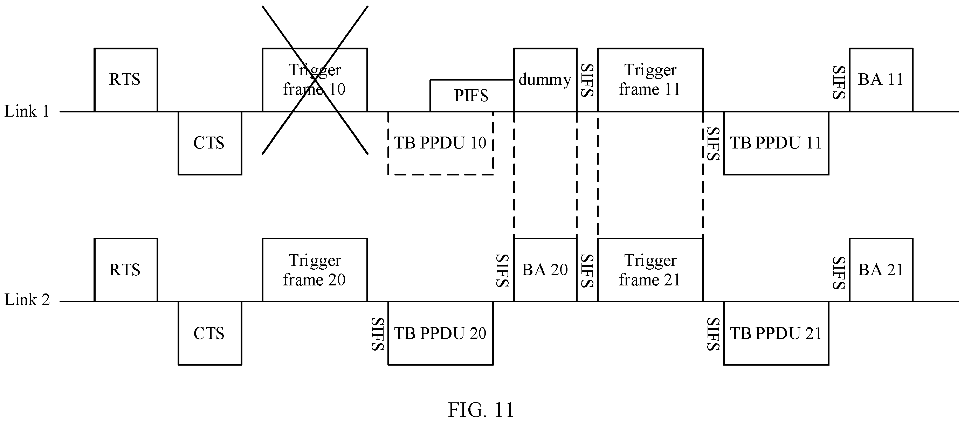

For example, FIG. 11 is used as an example to describe the foregoing error recovery solution 3. A transmit end MLD transmits a trigger frame 10 on a link 1, and transmits a trigger frame 20 on a link 2. The trigger frame 10 is aligned with the trigger frame 20. Transmission of the trigger frame 10 fails, and the trigger frame 20 is successfully transmitted. Then, the transmit end MLD receives a TB PPDU 20 on the link 2, and replies with a BA 20 for the TB PPDU 20 on the link 2. When transmission of the trigger frame 10 fails, the transmit end MLD detects a channel status of the link 1. If the link 1 remains in an idle state within a PIFS before a transmission start moment of the BA 20, the transmit end MLD transmits a dummy frame through the link 1 at a fourth moment. Then, the transmit end MLD transmits a trigger frame 11 through the link 1 after an SIFS starting from a transmission end moment of the dummy frame, and transmits a trigger frame 21 through the link 1 after an SIFS starting from a transmission end moment of the BA 20. In this way, it is ensured that the trigger frame 11 is aligned with the trigger frame 21, a subsequent TB PPDU 11 is aligned with a TB PPDU 21, and a BA 11 is aligned with a BA 21.

Optionally, when an error occurs in the first TB PPDU, because there is a specific discrepancy between a transmission end moment of the first TB PPDU and a transmission end moment of the second TB PPDU, in this embodiment of this application, a time interval between the transmission start moment of the BA for the second TB PPDU and the transmission end moment of the second TB PPDU may be modified from an SIFS to PIFS + offset. In this way, in one aspect, it is ensured that the MLD has sufficient time to complete error recovery on the link 1 after the transmission end moment of the first TB PPDU; in another aspect, it is ensured that a transmission start moment of the dummy frame is aligned with the transmission start moment of the BA for the second TB PPDU.

The offset value may be a positive number or a negative number. This is not limited herein. Optionally, a value range of the offset may be [-8 µs, 8 µs] or [-4 µs, 4 µs]. For example, the offset may be 8 µs, 4 µs, -4 µs, -8 µs, or the like.

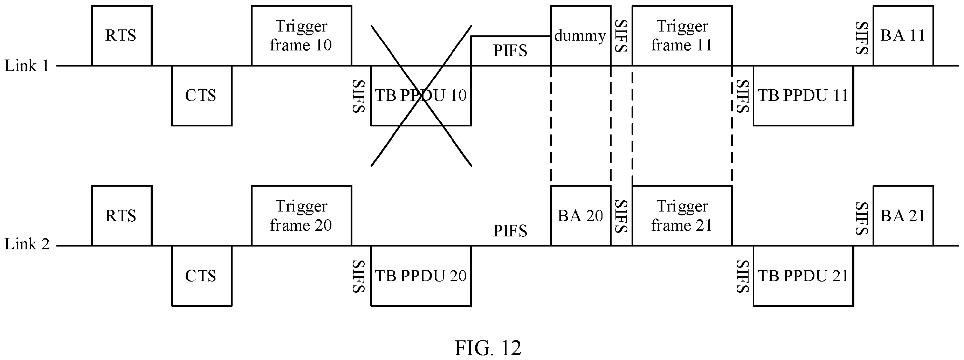

For example, FIG. 12 is used as an example to describe the foregoing error recovery solution 3. A transmit end MLD transmits a trigger frame 10 on a link 1, and transmits a trigger frame 20 on a link 2. The trigger frame 10 is aligned with the trigger frame 20. The transmit end MLD receives a TB PPDU 20 on the link 2, and replies with a BA 20 for the TB PPDU 20 on the link 2. The transmit end MLD receives a TB PPDU 10 on the link 1, but an error occurs in the TB PPDU 10. Therefore, the transmit end MLD performs a backoff procedure on the link 1. If a backoff counter on the link 1 backs off to 0 before a fourth moment, the transmit end MLD keeps a count value of the backoff counter at 0 until the fourth moment arrives. Then, the transmit end MLD transmits a dummy frame through the link 1 at the fourth moment. Then, the transmit end MLD transmits a trigger frame 11 through the link 1 after an SIFS starting from a transmission end moment of the dummy frame, and transmits a trigger frame 21 through the link 1 after an SIFS starting from a transmission end moment of the BA 20. In this way, it is ensured that the trigger frame 11 is aligned with the trigger frame 21, a subsequent TB PPDU 11 is aligned with a TB PPDU 21, and a BA 11 is aligned with a BA 21.

Based on the embodiment shown in FIG. 6, when the MLD does not successfully receive, through the first link, the first TB PPDU triggered by the first trigger frame, and successfully receives, through the second link, the second TB PPDU triggered by the second trigger frame, the MLD transmits the third trigger frame through the first link at the second moment, and transmits the fourth trigger frame through the second link at the third moment. It can be learned that, when an error related to the first trigger frame occurs on the first link, the MLD may further transmit a next trigger frame (that is, the third trigger frame) on the first link, to implement error recovery on the first link. In addition, because the second moment is aligned with the third moment, the third trigger frame and the fourth trigger frame are synchronously transmitted, to reduce a probability that the MLD needs to simultaneously transmit and receive data, and ensure normal MLD communication.

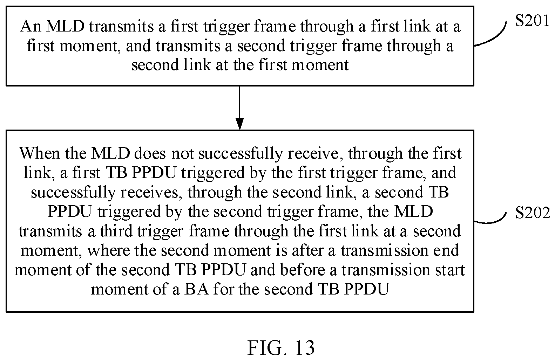

FIG. 13 shows a trigger frame transmitting method according to an embodiment of this application. The method includes the following steps.

S201: An MLD transmits a first trigger frame through a first link at a first moment, and transmits a second trigger frame through a second link at the first moment.

For step S201, refer to related descriptions of step S101 in the embodiment shown in FIG. 6. Details are not described herein again.

S202: When an error occurs in a first TB PPDU triggered by the first trigger frame, and the MLD successfully receives, through the second link, a second TB PPDU triggered by the second trigger frame, the MLD transmits a third trigger frame through the first link at a second moment.

The second moment is after a transmission end moment of the second TB PPDU and before a transmission start moment of a BA for the second TB PPDU. It should be understood that the second moment may be the transmission end moment of the second TB PPDU, or the transmission start moment of the BA for the second TB PPDU, or any moment in a time period between the transmission end moment of the second TB PPDU and the transmission start moment of the BA for the second TB PPDU.

For example, the second moment may be one RX/TX time away from the transmission end moment of the second TB PPDU, to reduce a probability that the MLD performs simultaneous transmitting and receiving.

The second moment is after the transmission end moment of the second TB PPDU, so that the MLD does not receive the second TB PPDU and transmit the third trigger frame simultaneously, that is, a case in which the MLD needs to perform simultaneous transmitting and receiving is avoided, to ensure normal communication of the MLD.

Because the MLD does not support STR, transmitting the BA for the second TB PPDU on the second link changes a channel detection result of the first link to a busy state, and consequently interferes normal error recovery on the first link. Therefore, the second moment is before the transmission start moment of the BA for the second TB PPDU. Therefore, that the MLD complete error recovery before the second moment prevents error recovery on the first link from being affected by the BA for the second TB PPDU.

For specific descriptions of an error occurring in the first TB PPDU and the third trigger frame, refer to the foregoing related descriptions. Details are not described herein again.

The following describes an error recovery solution that may be used by the MLD.

Error recovery solution 4: After the MLD determines that an error occurs in the received first TB PPDU triggered by the first trigger frame, the MLD performs channel detection on the first link. When the first link is in an idle state within a PIFS before the second moment, the MLD transmits the third trigger frame through the first link at the second moment.

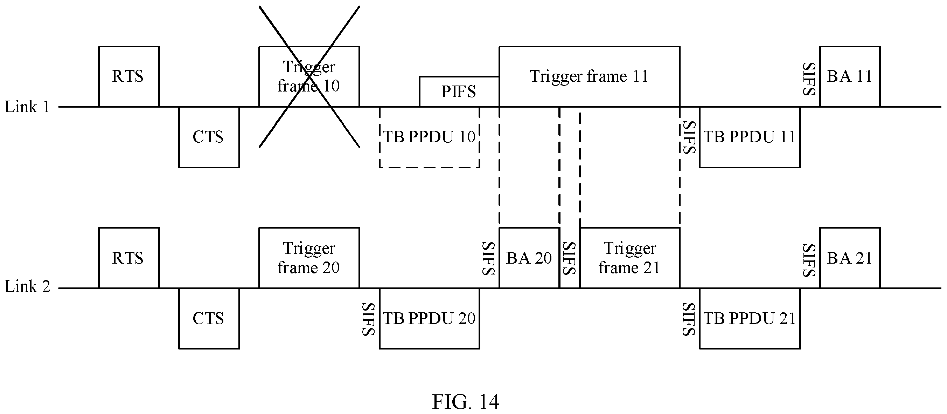

For example, FIG. 14 is used as an example to describe the error recovery solution 4. A transmit end MLD transmits a trigger frame 10 on a link 1, and transmits a trigger frame 20 on a link 2. The trigger frame 10 is aligned with the trigger frame 20. Transmission of the trigger frame 10 fails, and the trigger frame 20 is successfully transmitted. For the link 2, the transmit end MLD receives a TB PPDU 20 on the link 2, and replies with a BA 20 for the TB PPDU 20 on the link 2. For the link 1, the transmit end MLD detects a channel status of the link 1; and if the link 1 is in an idle state within a PIFS before a transmission start moment of the BA 20, the transmit end MLD starts to transmit a trigger frame 11 at the transmission start moment of the BA 20. A transmission end moment of the trigger frame 11 is aligned with a transmission end moment of a trigger frame 21.

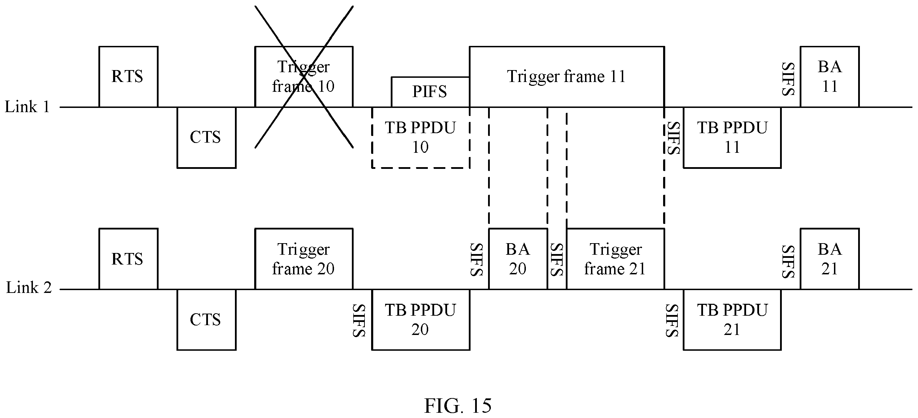

For example, FIG. 15 is used as an example to describe the error recovery solution 4. A transmit end MLD transmits a trigger frame 10 on a link 1, and transmits a trigger frame 20 on a link 2. The trigger frame 10 is aligned with the trigger frame 20. Transmission of the trigger frame 10 fails, and the trigger frame 20 is successfully transmitted. For the link 2, the transmit end MLD receives a TB PPDU 20 on the link 2, and replies with a BA 20 for the TB PPDU 20 on the link 2. For the link 1, the transmit end MLD detects a channel status of the link 1; and if the link 1 is in an idle state within a PIFS before a transmission end moment of the TB PPDU 20, the transmit end MLD starts to transmit the trigger frame 11 at the transmission end moment of the TB PPDU 20. A transmission end moment of the trigger frame 11 is aligned with a transmission end moment of a trigger frame 21.

Optionally, for the error recovery solution 4, if the first link is not kept in an idle state within a PIFS before the second moment, it indicates that error recovery fails. Therefore, the MLD may not transmit the third trigger frame through the first link at the second moment.

Error recovery solution 5: After the MLD determines that an error occurs in the received first TB PPDU triggered by the first trigger frame, the MLD performs a backoff procedure on the first link. When a backoff counter of the first link backs off to 0 before the second moment, the MLD keeps the backoff counter of the first link at 0 until the second moment. Then, the MLD transmits the third trigger frame through the first link at the second moment.

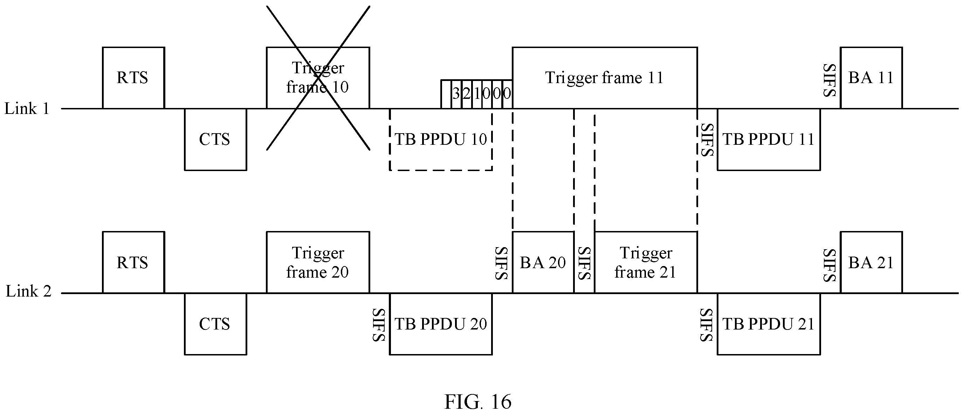

For example, FIG. 16 is used as an example to describe the error recovery solution 4. A transmit end MLD transmits a trigger frame 10 on a link 1, and transmits a trigger frame 20 on a link 2. The trigger frame 10 is aligned with the trigger frame 20. Transmission of the trigger frame 10 fails, and the trigger frame 20 is successfully transmitted. For the link 2, the transmit end MLD receives a TB PPDU 20 on the link 2, and replies with a BA 20 for the TB PPDU 20 on the link 2. For the link 1, the transmit end MLD performs a backoff procedure on the link 1. If the backoff counter on the link 1 backs off to 0 before a transmission start moment of a BA 20, the transmit end MLD keeps the backoff counter on the link 1 at 0 until the transmission start moment of the BA 20. Then, the transmit end MLD transmits a trigger frame 11 through the link 1 at the transmission start moment of the BA 20. A transmission end moment of the trigger frame 11 is aligned with a transmission end moment of a trigger frame 21.

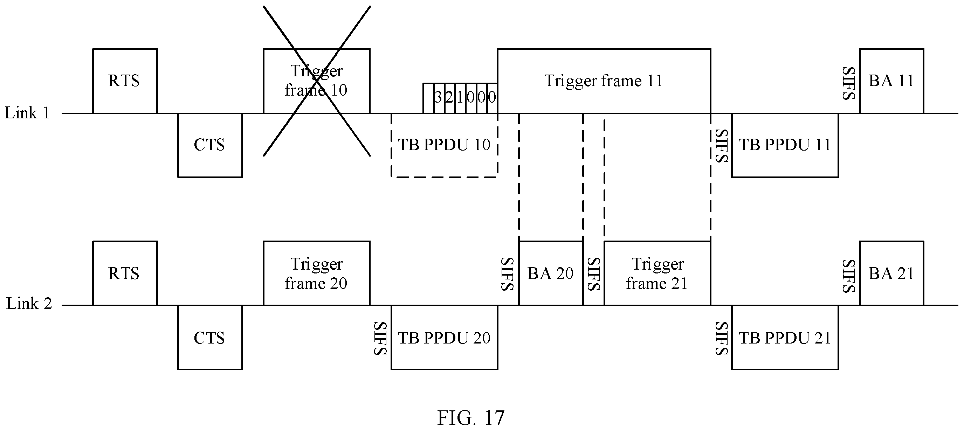

For example, FIG. 17 is used as an example to describe the error recovery solution 4. A transmit end MLD transmits a trigger frame 10 on a link 1, and transmits a trigger frame 20 on a link 2. The trigger frame 10 is aligned with the trigger frame 20. Transmission of the trigger frame 10 fails, and the trigger frame 20 is successfully transmitted. For the link 2, the transmit end MLD receives a TB PPDU 20 on the link 2, and replies with a BA 20 for the TB PPDU 20 on the link 2. For the link 1, the transmit end MLD performs a backoff procedure on the link 1. If a backoff counter on the link 1 backs off to 0 before a transmission end moment of the TB PPDU 20, the transmit end MLD keeps the backoff counter of the link 1 at 0 until the transmission end moment of the TB PPDU 20. Then, the transmit end MLD transmits a trigger frame 11 at the transmission end moment of the TB PPDU 20 through the link 1. A transmission end moment of the trigger frame 11 is aligned with a transmission end moment of a trigger frame 21.

Optionally, for the error recovery solution 5, if the backoff counter of the first link does not back off to 0 before the second moment, it indicates that error recovery fails. Therefore, the MLD may not transmit the third trigger frame through the first link at the second moment.

It should be understood that, after the MLD successfully receives a second TB PPDU, the MLD may reply with a BA for the second TB PPDU through the second link. Then, the MLD may further transmit a fourth trigger frame through the second link at a third moment.

The third moment is later than the second moment. Optionally, a time interval between the third moment and a transmission end moment of a BA for the second TB PPDU is an SIFS.

It should be understood that a transmission end moment of the fourth trigger frame is aligned with a transmission end moment of the third trigger frame, to ensure that the MLD uses a synchronous link communication manner, and reduce a probability that the MLD needs to simultaneously transmit and receive.

It should be understood that, that the third moment is aligned with the fourth moment may mean that the third moment and the fourth moment are the same, or an offset value between the third moment and the fourth moment is within an offset range allowed in the 802.11 protocol. For example, the offset range allowed in the current 802.11 protocol may be [-8 µs, 8 µs] or [-4 µs, 4 µs].

Based on the embodiment shown in FIG. 13, when an error occurs in the first TB PPDU triggered by the first trigger frame, and the second TB PPDU triggered by the second trigger frame is successfully received on the second link, the MLD transmits the third trigger frame through the first link at the second moment. It can be learned that, when an error related to the first trigger frame occurs on the first link, the MLD may further transmit a next trigger frame (that is, the third trigger frame) on the first link, to implement error recovery on the first link. In addition, the second moment is after the transmission end moment of the second TB PPDU and before the transmission start moment of the BA for the second TB PPDU, to avoid adverse impact caused by the BA for the second TB PPDU on the error recovery on the first link, so that normal error recovery on the first link can be performed. In addition, in a time period from the transmission end moment of the second TB PPDU to the transmission start moment of the BA for the second TB PPDU, the MLD does not need to receive data on the second link. The MLD transmits the third trigger frame in the time period, so that a probability that the MLD needs to simultaneously transmit and receive data is reduced, and normal communication of the MLD is ensured.

It should be noted that in this embodiment of this application, the BA may be understood as a reply frame. In addition, the reply frame may further include an acknowledgment (acknowledgement, ACK). Therefore, the BA in this application may alternatively be an ACK. In other words, the BA in this application only represents a reply frame, and the reply frame does not necessarily need to be the BA, and may be an ACK.

Optionally, in a multi-link communication scenario, when an STR MLD transmits data to an NSTR MLD, it may be further required that transmitting moments of PPDUs transmitted by the STR MLD on different links be aligned. The PPDU transmitted by the STR MLD may be an uplink (uplink, UL) PPDU or a downlink (downlink, DL) PPDU.

It should be understood that, that transmitting moments of two PPDUs are aligned may mean that transmitting moments of the two PPDUs are the same, or an offset between transmitting moments of the two PPDUs is within an offset range allowed in the 802.11 protocol. For example, the offset range allowed in the current 802.11 protocol may be [-8 µs, 8 µs] or [-4 µs, 4 µs].

The foregoing mainly describes the solutions provided in embodiments of this application from the perspective of the methods. It may be understood that, to implement the foregoing functions, the MLD includes a corresponding hardware structure and/or software module for implementing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the apparatus may be divided into functional modules based on the foregoing method examples. For example, each functional module may be obtained through division based on each corresponding function, or two or more functions may be integrated into one functional module. The integrated module may be implemented in a form of hardware, or may be implemented in a form of a software functional module. In the embodiments of this application, division into the modules is an example, and is merely logical function division. There may be another division manner during actual implementation. An example in which each function module is obtained through division based on each corresponding function is used below for description.

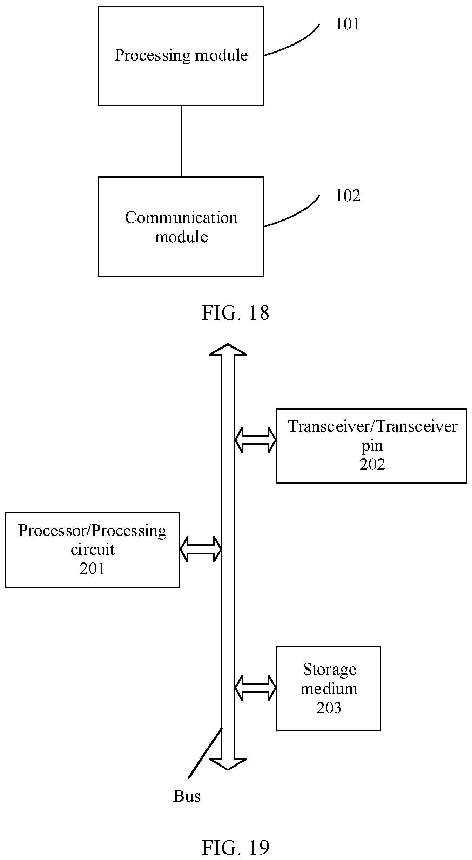

FIG. 18 is a communication apparatus according to an embodiment of this application. The communication apparatus includes a processing module 101 and a communication module 102.

In a possible implementation, the communication module 102 performs steps S101 and S102 in FIG. 6 and another communication operation (for example, transmitting a BA) in embodiments of this application. The processing module 101 is configured to control the communication module to perform step S102 in FIG. 6 and another processing operation (for example, detecting a channel status of a first link) in embodiments of this application.

In a possible implementation, the communication module 102 performs steps S201 and S202 in FIG. 13 and another communication operation (for example, transmitting a BA) in embodiments of this application. The processing module 101 is configured to control the communication module to perform steps S201 and S202 in FIG. 13 and another processing operation (for example, detecting a channel status of a first link) in embodiments of this application.

Optionally, the processing module 101 may include at least two processing submodules, and each processing submodule may be responsible for processing operations on one link. The communication module 102 may include at least two communication submodules, and each communication submodule may be responsible for communication operations on one link.

FIG. 19 is a diagram of a structure of a possible product form of a communication apparatus according to an embodiment of this application.

In a possible product form, the communication apparatus in this embodiment of this application may be an MLD, and the MLD includes a processor 201 and a transceiver 202.

In a possible implementation, the transceiver 202 performs steps S101 and S102 in FIG. 6 and another communication operation (for example, transmitting a BA) in embodiments of this application. The processor 201 is configured to control the communication module to perform step S102 in FIG. 6 and another processing operation (for example, detecting a channel status of the first link) in embodiments of this application.

In another possible implementation, the transceiver 202 performs steps S201 and S202 in FIG. 13 and another communication operation (for example, transmitting a BA) in embodiments of this application. The processor 201 is configured to control the communication module to perform steps S201 and S202 in FIG. 13 and another processing operation (for example, detecting a channel status of a first link) in embodiments of this application.

As a possible product form, the communication apparatus described in embodiments of this application may be implemented by using a chip. The chip includes a processing circuit 201 and a transceiver pin 202. Optionally, the chip may further include a storage medium 203.

In another possible product form, the communication apparatus described in this embodiment of this application may alternatively be implemented by using the following circuit or component: one or more field programmable gate arrays (field programmable gate array, FPGA), a programmable logic device (programmable logic device, PLD), a controller, a state machine, gate logic, a discrete hardware component, any other suitable circuits, or any combination of circuits that can perform various functions described in this application.

Optionally, an embodiment of this application further provides a computer-readable storage medium. The computer-readable storage medium stores computer instructions. When the computer instructions are run on a computer, the computer is enabled to perform the communication method in the foregoing method embodiments.

Optionally, an embodiment of this application further provides a computer program product including computer instructions. When the computer instructions are run on a computer, the computer is enabled to perform the communication method in the foregoing method embodiments.

It should be understood that the computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

It should be understood that the apparatus and method disclosed in the several embodiments provided in this application may be implemented in other manners. For example, the described apparatus embodiments are merely examples. For example, division into the modules or units is merely logical function division. There may be another division manner during actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software function unit and sold or used as an independent product, the integrated unit may be stored in a readable storage medium. Based on such an understanding, the technical solutions of this application essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A trigger frame transmitting method, wherein the method comprises:
transmitting, by a multi-link device MLD, a first trigger frame through a first link at a first moment, and transmitting a second trigger frame through a second link at the first moment, wherein a transmission end moment of the first trigger frame is aligned with a transmission end moment of the second trigger frame; and
when the MLD does not successfully receive, through the first link, a first trigger-based physical layer protocol data unit TB PPDU triggered by the first trigger frame, and successfully receives, through the second link, a second TB PPDU triggered by the second trigger frame, transmitting, by the MLD, a third trigger frame through the first link at a second moment, and transmitting a fourth trigger frame through the second link at a third moment, wherein the second moment is aligned with the third moment.

2. The method according to claim 1, wherein after the MLD does not successfully receive, through the first link, a first TB PPDU triggered by the first trigger frame, the method further comprises:
detecting, by the MLD, a channel status of the first link after a transmission end moment of a block acknowledgment BA for the second TB PPDU.

3. The method according to claim 2, wherein the transmitting, by the MLD, a third trigger frame through the first link at a second moment comprises:
when the first link is in an idle state within a first preset time interval after the transmission end moment of the BA for the second TB PPDU, transmitting, by the MLD, the third trigger frame through the first link at the second moment.

4. The method according to claim 3, wherein a time interval between the third moment and the transmission end moment of the BA for the second TB PPDU is equal to the first preset time interval.

5. The method according to claim 3 or 4, wherein the first preset time interval is a point coordination function interframe space PIFS.

6. The method according to claim 1, wherein after the MLD does not successfully receive, through the first link, a first TB PPDU triggered by the first trigger frame, the method further comprises:
performing, by the MLD, a backoff procedure on the first link;
when a backoff counter of the first link backs off to 0 before a transmission start moment of a BA for the second TB PPDU, keeping, by the MLD, the backoff counter of the first link at 0 until transmission of the BAfor the second TB PPDU ends; and
detecting, by the MLD, a channel status of the first link from a transmission end moment of the BAfor the second TB PPDU.

7. The method according to claim 6, wherein the transmitting, by the MLD, a third trigger frame through the first link at a second moment comprises:
when the first link is in an idle state within a second preset time interval after the transmission end moment of the BA for the second TB PPDU, transmitting, by the MLD, the third trigger frame through the first link at the second moment.

8. The method according to claim 7, wherein a time interval between the third moment and the transmission end moment of the BA for the second TB PPDU is equal to the second preset time interval.

9. The method according to claim 7 or 8, wherein the second preset time interval is a short interframe space SIFS.

10. The method according to claim 1, wherein after the MLD does not successfully receive, through the first link, a first TB PPDU triggered by the first trigger frame, the method further comprises:
transmitting, by the MLD, a dummy dummy frame through the first link at a fourth moment, wherein the fourth moment and a transmission start moment of a BA for the second TB PPDU are aligned, and a length of the dummy frame is the same as a length of the BA for the second TB PPDU.

11. The method according to claim 10, wherein before the transmitting, by the MLD, a dummy frame through the first link at a fourth moment, the method further comprises:
determining, by the MLD, that the first link is in an idle state within a PIFS before the fourth moment.

12. The method according to claim 10, wherein before the transmitting, by the MLD, a dummy frame through the first link at a fourth moment, the method further comprises:
performing, by the MLD, a backoff procedure on the first link; and
when a backoff counter of the first link backs off to 0 before the transmission start moment of the BA for the second TB PPDU, keeping, by the MLD, the backoff counter of the first link at 0 until the fourth moment.

13. The method according to any one of claims 1 to 12, wherein that the MLD does not successfully receive, through the first link, a first TB PPDU triggered by the first trigger frame comprises:
determining, by the MLD, that transmission of the first trigger frame fails.

14. The method according to any one of claims 1 to 12, wherein that the MLD does not successfully receive, through the first link, a first TB PPDU triggered by the first trigger frame comprises:
determining, by the MLD, that an error occurs in the received first TB PPDU.

15. A multi-link device MLD, comprising a processing module and a communication module connected to the processing module, wherein
the communication module is configured to transmit a first trigger frame through a first link at a first moment, and transmit a second trigger frame through a second link at the first moment, wherein a transmission end moment of the first trigger frame is aligned with a transmission end moment of the second trigger frame; and
the processing module is further configured to: when the MLD does not successfully receive, through the first link, a first TB PPDU triggered by the first trigger frame, and successfully receives, through the second link, a second TB PPDU triggered by the second trigger frame, control the communication module to transmit a third trigger frame through the first link at a second moment, and transmit a fourth trigger frame through the second link at a third moment, wherein the second moment is aligned with the third moment.

16. The MLD according to claim 15, wherein
the processing module is further configured to: after the MLD does not successfully receive, through the first link, the first TB PPDU triggered by the first trigger frame, detect a channel status of the first link after a transmission end moment of a BA for the second TB PPDU.

17. The MLD according to claim 16, wherein
the communication module is configured to: when the first link is in an idle state within a first preset time interval after the transmission end moment of the BA for the second TB PPDU, transmit the third trigger frame through the first link at the second moment.

18. The MLD according to claim 17, wherein a time interval between the third moment and the transmission end moment of the BA for the second TB PPDU is equal to the first preset time interval.

19. The MLD according to claim 18, wherein the first preset time interval is a PIFS.

20. The MLD according to claim 15, wherein
the processing module is further configured to: after the MLD does not successfully receive, through the first link, the first TB PPDU triggered by the first trigger frame, perform a backoff procedure on the first link; when a backoff counter of the first link backs off to 0 before a transmission start moment of a BA for the second TB PPDU, keep the backoff counter of the first link at 0 until transmission of the BA for the second TB PPDU ends; and detect a channel status of the first link from a transmission end moment of the BA for the second TB PPDU.

21. The MLD according to claim 20, wherein
the communication module is configured to: when the first link is in an idle state within a second preset time interval after the transmission end moment of the BA for the second TB PPDU, transmit the third trigger frame through the first link at the second moment.

22. The MLD according to claim 21, wherein a time interval between the third moment and the transmission end moment of the BA for the second TB PPDU is equal to the second preset time interval.

23. The MLD according to claim 22, wherein the second preset time interval is an SIFS.

24. The MLD according to claim 15, wherein
the communication module is further configured to: after the MLD does not successfully receive, through the first link, the first TB PPDU triggered by the first trigger frame, transmit a dummy frame through the first link at a fourth moment, wherein the fourth moment and a transmission start moment of a BA for the second TB PPDU are aligned, and a length of the dummy frame is the same as a length of the BA for the second TB PPDU.

25. The MLD according to claim 24, wherein
the processing module is further configured to: before the communication module transmits the dummy frame through the first link at the fourth moment, determine that the first link is in an idle state within a PIFS before the fourth moment.

26. The MLD according to claim 25, wherein
the processing module is further configured to: perform a backoff procedure on the first link; and when a backoff counter of the first link backs off to 0 before the transmission start moment of the BA for the second TB PPDU, keep the backoff counter of the first link at 0 until the fourth moment.

27. The MLD according to any one of claims 15 to 26, wherein that the MLD does not successfully receive, through the first link, a first TB PPDU triggered by the first trigger frame comprises:
determining, by the MLD, that transmission of the first trigger frame fails.

28. The MLD according to any one of claims 15 to 26, wherein that the MLD does not successfully receive, through the first link, a first TB PPDU triggered by the first trigger frame comprises:
determining, by the MLD, that an error occurs in the received first TB PPDU.

29. A chip, wherein the chip comprises a processing circuit and a transceiver pin, the processing circuit is configured to perform a processing operation in the method according to any one of claims 1 to 14, and the transceiver pin is configured to perform a communication operation in the method according to any one of claims 1 to 14.

30. A computer-readable storage medium, wherein the computer-readable storage medium stores computer instructions; and when the computer instructions are run on a computer, the computer is enabled to perform the method according to any one of claims 1 to 14.
